# EUROPEAN PATENT APPLICATION

(11) **EP 1 124 203 A2**
(43) Date of publication of application: **16.08.2001**
(21) Application number: 01103013.7
(22) Date of filing: 08.02.2001
(51) Int. Cl.: G06T 11/60

(54) **Image forming system and image forming method**

(30) Priority: 09.02.2000 JP 2000032115
(71) Applicant: RISO KAGAKU CORPORATION, Tokyo (JP)
(72) Inventor: Nomura, Kunio, c/o RISO KAGAKU CORPORATION, Inashiki-gun, Ibaraki (JP)
(74) Representative: Grünecker, Kinkeldey, Stockmair & Schwanhäusser Anwaltssozietät

(57) **Abstract**

A composited area desired in a base original is indicated by a coordinate input device (5a) of an image editing apparatus (3), and the base original is read by a scanner section (10) of the image editing apparatus (3). An extracted area desired in the other original is indicated by the coordinate input device (5a), and a desired editorial process is designated by a command input device (5b). A editing device (6) performs a scaling operation such that the size of an image to be extracted from the other original by the scanner section (10) becomes identical with the size of the composited area of the base original, thus changing reading of the scanner section (10). The resultantly-extracted image data is composited into the composited area, and the composited data is output and printed by a print device (12).

## Description

### BACKGROUND OF THE INVENTION

### 1. Field of the Invention

The present invention relates to an image forming system comprising an image editing apparatus (i.e., digitizer) capable of entering a coordinate position of an original onto a tablet and predetermined information, such as editorial details, and an image forming apparatus. More particularly, the present invention relates to an image forming system and an image forming method for generating image data in which image data regarding a plurality of originals are combined.

The present application is based on Japanese Patent Application No. 2000-032115, which is incorporated herein by reference.

### 2. Description of the Related Art

With regard to use of an image forming apparatus, such as a copier, a stencil printing machine, etc., there has been recently proposed to use an image editing apparatus (i.e., digitizer) as an editing device for editing copied images. An image forming apparatus, to which a digitizer of this type is connectable, has already been commercialized.

The digitizer is equipped with a coordinate input section for entering coordinates representing the location of an original set on a tablet surface, and a command input section for entering specific editorial details. In the command input section, there are provided various function keys including a key to be used for indicating, for example, the region of an editorial object within the original, a key to be used for moving the editorial object to another location, a key to be used for indicating the movement direction and distance over which the editorial object is to be moved, and so on.

An image editing operation performed through use of the image editing apparatus now will be described. First, an original is set on the tablet, and then the required positional information and functional information are input by use of a custom-designed pen or the like, thereby acquiring positional information and functional information.

Afterwards, the original is removed from the tablet and set on an original mounting table of a scanner. The scanner's operation is started to read an image of the original so that the image data is formed on the basis of editorial details designated by the positional information and the functional information. Based on the image data, the image is printed on a predetermined printing sheet (e.g., printing paper).

In a case where printed matter is to be produced, using the image editing apparatus, by editing image data pertaining to a plurality of originals, an editing of images based on the plurality of originals cannot be directly performed. Therefore, only the required portion(s) of the image is extracted and edited relative to one original, and the thus-edited image is printed out. Similarly, such the process is repeatedly performed plural times relative to the remaining originals to obtain overprinted matter.

However, the above-mentioned construction of the image editing apparatus has the drawback that the number of printing operations required for producing a single sheet of printed matter is increased in proportion to the number of originals.

Another drawback of the image editing apparatus is a tendency to cause displacement of an image on the first original from an image on the n^{th} original, where "n" is 2 or more, depending on the location of a sheet.

In a case where images to be combined are printed while being changed in size, determination as to whether images are printed in appropriate positions or in appropriate sizes requires an actual printing operation, thus rendering adjustment very difficult and involving much effort.

### SUMMARY OF THE INVENTION

The present invention has been conceived to solve such drawbacks and is aimed at providing an image forming system and an image forming method which enable an editing of a plurality of originals in combination through a simple operation, and which enable production of printed matter that is free of displaced images.

To achieve the object, according to the first aspect of the present invention, there is provided an image forming method for forming an image on a printable object on the basis of image data obtained by editing images of a plurality of originals. More specifically, the image forming method comprises the steps of: determining an image composited area of a first original by indicating coordinates of the image composited area; extracting an image extracted area of a second original to produce image data pertaining to the image extracted area by indicating coordinates of the image extracted area; editing the image data so as to composite the image extracted area of the second original into the image composited area of the first original in order to obtain post-editing image data for representing a composite image based on the first and second originals; and forming the composite image on a printable object in accordance with the post-editing image data. The image forming method may further comprise a step of designating an editorial process in which the image extracted area of the second original is edited relative to the image composited area of the first original, wherein the editing step is performed in accordance with the editorial process.

In the image forming method, post-editing image data can be obtained by compositing an extracted image in a first (base) original. A composite image can be printed through use of the post-editing image data by a single printing operation, whereby printed matter without displaced composite images can be obtained. Since an image to be composited is extracted and the thusextracted image is composited into a first (base) original, useless reading of image data can be eliminated, and the volume of image data to be handled can be minimized.

According to the first aspect of the present invention, there is provided an image forming system which comprises a coordinate input device which is capable of indicating an image composited area of a first original and an image extracted area of a second original; a command input device which is capable of designating an editorial process in which the image extracted area of the second original is edited relative to the image composited area of the first original; a scanner section which reads image data on the first and second originals; an editing device which edits image data pertaining to the image extracted area of the second original so as to composite the image extracted area of the second original into the image composited area of the first original, in accordance with the editorial process designated by the command input device, in order to obtain post-editing image data for representing a composite image based on the first and second originals; and a print device which forms the composite image on a printable object in accordance with the post-editing image data.

In the image forming system, an image, into which a plurality of images are composited, can be readily obtained by indicating only coordinates and an editorial process for each original through use of an image editing apparatus, such as a digitizer. A composite image can be printed through use of post-editing image data by a single printing operation, whereby printed matter without displaced composite images can be obtained.

According to the second aspect of the present invention, in the image forming method, it is preferable that in a case where a portion or a whole of an image of the second original is extracted, and is composited into the first original, a size of an image composited area of the first original is compared in the editing step with a size of an image extracted area of the second original, thereby effecting a scaling process so as to fit an image located in the image extracted area to the image composited area.

Similarly, in the image forming system, it is preferable that in a case where a portion or a whole of the second original is extracted, and is composited into the first original, the editing device compares a size of an image composited area of the first original indicated by the coordinate input device with a size of an image extracted area of the second original, thereby effecting a scaling process so as to fit an image located in the image extracted area to the image composited area.

In the image forming method and system, since the size of a composited area and the size of an extracted area can be matched by the scaling operation, an extracted image can be located on and composited into the composited area on the first original. An editing of a plurality of originals can be performed readily.

According to the third aspect of the present invention, in the image forming method, it is preferable that the image extracted area of the second original is read in accordance with a scaling factor obtained as a result of the scaling process.

Similarly, in the image forming system, it is preferable that the editing device performs a process for causing the scanner section to read the second original in accordance with a scaling factor obtained as a result of the scaling process.

In the image forming method and system, a reading of an extracted image to be extracted from an original is changed at the time of the scaling operation. According to the scaling operation to be performed during a reading operation, the quality of image data can be maintained, thereby preventing deterioration of quality of image data, which would otherwise be caused when the scaling operation is performed after reading the image.

According to the fourth aspect of the present invention, it is preferable that the image forming method further comprises a step of storing a portion or a whole of image data pertaining to the respective first and second originals, wherein a storage image obtained in the storing step is read in the editing step in order to composite a read image into the image composited area of the first original.

Similarly, it is preferable that the image forming system further comprises a storage device which stores a portion or a whole of image data pertaining to the respective first and second originals read by the scanner section, wherein the editing device reads a storage image from the storage device, and composites a read image into the image composited area of the first original.

In the image forming method and system, the read image data is stored in the storage device. Hence, a reading operation and an editorial process can be effected separately. Accordingly, an editorial process can be performed through use of only the image data stored in the storage device, thus rendering operations efficiently.

At this time, according to the fifth aspect of the present invention, a scaling operation may be performed such that stored image data is matched in size with a composited area.

More specifically, according to the fifth aspect of the present invention, it is preferable that the image forming method further comprises a step of storing a portion or a whole of image data pertaining to the respective first and second originals, wherein, in a case where a storage image of the second original obtained in the storing step is composited into the first original, a size of an image composited area of the first original is compared in the editing step with a size of an image extracted area from which the storage image has been extracted, thereby effecting a scaling process so as to fit an extracted storage image to the image composited area.

Similarly, it is preferable that the image forming system further comprises a storage device which stores a portion or a whole of image data pertaining to the respective first and second originals read by the scanner section, wherein, in a case where a storage image read from the storage device is composited into the first original, the editing device compares a size of an image composited area of the first original indicated by the coordinate input device with a size of an image extracted area from which the storage image has been extracted, thereby effecting a scaling process so as to fit an extracted storage image to the size of the image composited area of the first original.

By way of the construction of the image forming method and system according to the present invention, in a case where an attempt is made to produce a single printed matter by editing a plurality of originals in combination, a coordinate input device (5a) of an image editing apparatus (3) is used, thereby indicating an image composited area on a base original (40) into which another original is to be composited. Image data pertaining to the base original (40) is obtained by a scanner section (10).

An image extracted area on a second original (41) from which an image is desired to be extracted is indicated by the coordinate input device (5a), and an image to be composited is indicated by a command input device (5b).

When the second original (41) is read, the editing device (6) composites the extracted image data to the image composited area on the image data pertaining to the base original. At this time, the image composited area is compared with the image extracted area, whereby the extracted image is scaled so as to fit the image composited area. The thus-composited, post-editing image data is output to a print device (12), where the data is printed out as printed matter.

In this way, every time that an original is scanned, an extracted image is composited into the image composited area indicated on the base original.

By printing based on post-editing image data, complete printed matter can be obtained, thus providing an image without displacement.

Further, a base original, or a portion or the whole of extracted image data can be stored beforehand. An editorial process can be performed through use of the thus-stored image data.

### BRIEF DESCRIPTION OF THE DRAWINGS

Fig. 1 is a block diagram showing an embodiment of an image forming system according to the present invention;
Fig. 2 is a block diagram showing the internal construction of an editing device;
Fig. 3 is an illustration showing a first original;
Fig. 4 is an illustration showing a second original;
Fig. 5 is an illustration showing an image stored in data storage memory;
Fig. 6 is a flowchart showing details of an editorial process performed in the present invention; and
Fig. 7 is an illustration showing a printed image obtained through an editorial process.

### DETAILED DESCRIPTION OF THE PREFERRED EMBODIMENTS

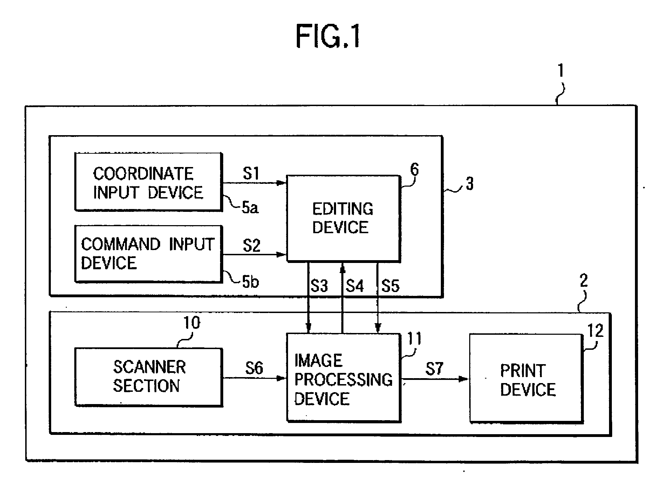

Preferred embodiments of the present invention now will be described with reference to Figs. 1 to 7.

Fig. 1 is a block diagram showing the overall configuration of an image forming system according to the present invention. An image forming system 1 is broadly divided into an image forming apparatus 2 and an image editing apparatus 3.

The present invention will be described with reference to an example which uses a stencil-forming/printing-type stencil printing machine as the image forming apparatus 2.

The image editing apparatus 3 comprises a coordinate input device 5a, a command input device 5b, and an editing device 6. Further, the image editing apparatus 3 includes a table (not shown) on which an original is to be placed. The location-coordinates on the original placed on the table are entered by the coordinate input device 5a. More specifically, the location-coordinates of the original on the table are detected, by indicating an area of the original desired to be edited, through use of a point indication pen. The editorial region can be set by indicating a plurality of points (e.g., two points or multiple points).

The command input device 5b is comprised of a plurality of editorial function keys provided on the side portion of the table. By pressing a desired key through use of the point indication pen, a corresponding editorial process is selected.

Coordinate data S1 output from the coordinate input device 5a and command data S2 output from the command input device 5b are output to the editing device 6.

The editing device 6 performs the editorial process designated by the command input device 5b relative to the editorial region set by the coordinate input device 5a. Based on a plurality of originals, the editing device 6 edits the originals and composites their images. By such an editorial process, the editing device 6 outputs modification data S3 to an image processing device 11 of the image forming apparatus 2. Editorial binary data S4 is input from the image processing device 11 to the editing device 6. Binary data S5, which represents print subjected to final editing, is output from the editing device 6 to the image processing device 11.

The image forming apparatus 2 comprises a scanner section 10, the image processing device 11, and a print device 12. The scanner section 10 reads an original's image, and outputs image data S6 pertaining thereto. The image processing device 11 performs an editorial process set relative to the editorial region designated by the editing device 6 from among the image data S6 read by the scanner section 10, to thereby produce print image data S7.

The print device 12 forms an image on a printable object, on the basis of the print image data S7.

Hereinafter, the embodiments of the present invention will use a printing sheet as an example of the printable object.

Here, the internal construction of the print device 12 now will be described briefly. The print device 12 is schematically comprised of a stencil-forming section and a printing section.

The stencil-forming section has a thermal head on which a plurality of heating elements are arranged in a line manner. On the basis of the print image data S7 output from the image processing device 11, a thermographic stencil is subjected to a stencil-forming process, whereby a desired perforated image is formed of a plurality of through holes in the stencil. The printing section has a substantially-cylindrical drum which is formed from a metal screen permitting passage of ink from the interior periphery to exterior periphery of the metal screen, and which is rotatable about a center line thereof, and a platen roller which rotates while pressing against the cylindrical drum. A printing sheet is fed to a space between the rotating cylindrical drum and the rotating platen roller, thereby producing printed matter on which an image corresponding to the perforated image of the stencil is formed in ink.

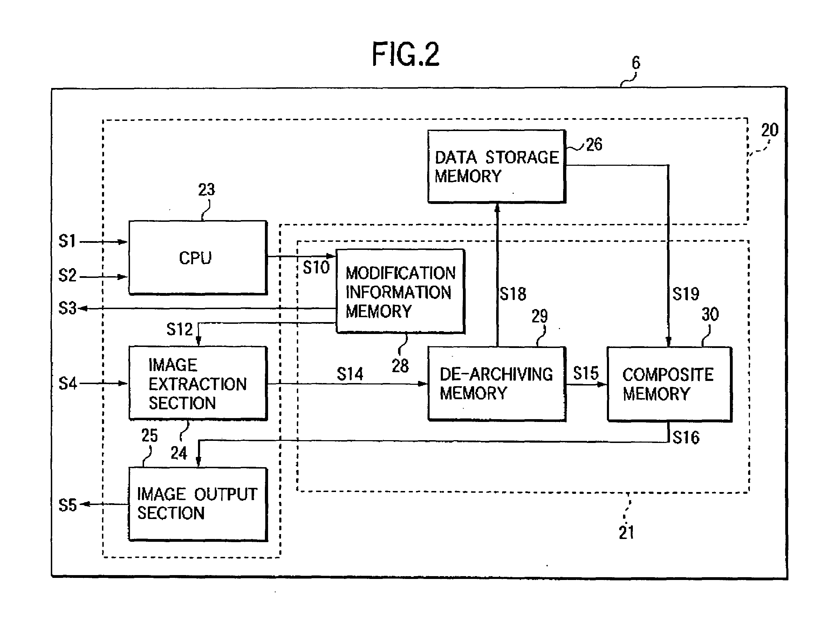

Fig. 2 is a block diagram showing the interior construction of the editing device 6. The editing device 6 is roughly divided into an editorial processing device 20 and a storage device 21.

The editorial processing device 20 includes a CPU 23, an image extraction section 24, an image output section 25, and a data storage memory 26.

The storage device 21 includes a modification information memory 28, a de-archiving memory 29, and a composite memory 30.

On the basis of an execution program for editing an image stored in a storage section (not shown), the CPU 23 performs centralized control of individual sections, thus executing an image editing process (described later). The coordinate data S1 and command data S2 for editing an image are input to the CPU 23 from the coordinate input device 5a and the command input device 5b. On the basis of the thus-input data, the de-archiving modification data S10 is output to the modification information memory 28.

Editorial modification information is stored in the modification information memory 2B, the modification data S3 is output to the image processing device 11, and the modification region data S12 is output to the image extraction section 24.

The editorial binary data S4 output from the image processing device 11 is input to the image extraction section 24, so that extracted data S14 pertaining to an image area extracted for an image editorial purpose is output to the de-archiving memory 29,

The de-archiving memory 29 is a buffer for temporarily storing the extracted data S14, and the stored extracted data S14 is output to the composite memory 30 as composite data S15.

A plurality of the composite data S15 are input to the composite memory 30 by an editorial process, and stored in the composite memory 30. The thus-composited, image data is output to the image output section 25 as composited data S16.

The image output section 25 converts the composited data S16 into the binary data S5 and outputs the thus-converted binary data S5 to the image processing device 11 of the image forming apparatus 2.

Storage data S18 (identical with the composite data S15) output from the de-archiving memory 29 can be stored in the data storage memory 26. The storage data S18 is read from the data storage memory 26 in a subsequent editorial operation, and the thus-read data can be output to the composite memory 30 as memory image data S19.

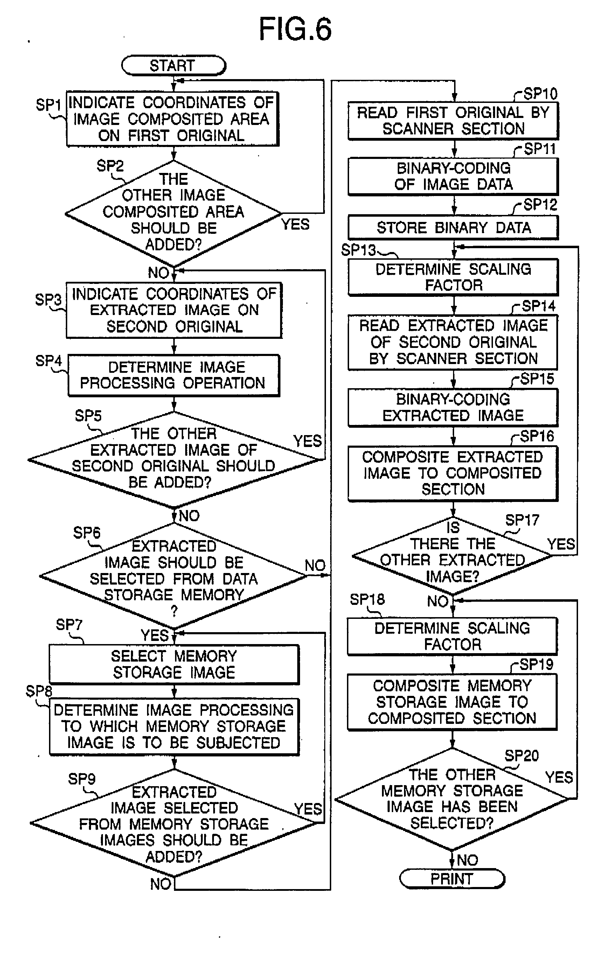

Next, the image editing operation of the editing device 6 having the foregoing construction now will be described. Fig. 6 is a flowchart showing details of the editorial process.

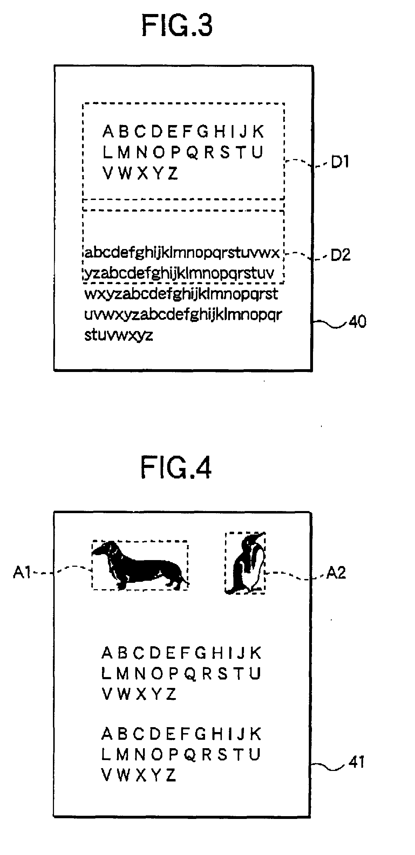

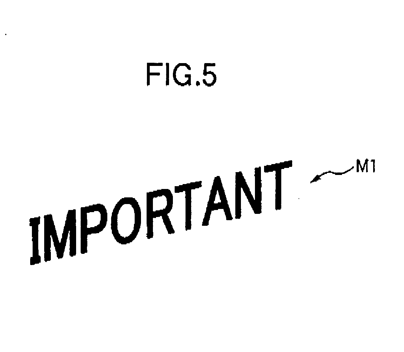

More specifically, the image editing operation will be described with reference to an example, in which a part of an image on a second original 41 shown in Fig. 4 is extracted, the thus-extracted image is composited in (i.e., overwritten on) a predetermined area of a first original (i.e., base original) 40 shown in Fig. 3, and an image stored in the data storage memory 26 shown in Fig. 5 is composited in (i.e., superimposed on) another predetermined area of the base original 40.

The first original 40 is placed on the table of the image editing apparatus 3, the coordinates of a part of the first original 40 desired to be composited are indicated by the coordinate input device 5a (SP1), and the thus-indicated coordinates are checked (SP2). As shown in Fig. 3, an image composited area D1 and an image composited area D2 are indicated, and images (described later) are composited into the image composited areas D1 and D2. As will be described in detail later in connection with an editorial process, the original image written in the image composited area Dl is erased by overwriting, and the original image written in the image composited area D2 is erased by superimposing.

Next, the second original 41 is placed on the table of the image editing apparatus 3, and the coordinates of an area desired to be extracted on the second original 41 (i.e., an extracted image A1) are indicated by use of the coordinate input device 5a (SP3). An editorial process, to which the image desired to be extracted is to be subjected (i.e., overwriting of the image on the image composited area D1), is determined by the command input device 5b (SP4). If there is another area desired to be extracted (YES is selected in SP5), the process proceeds to step SP3, and a similar process is iterated. If no other area is desired to be extracted (NO is selected in SP5), the extracted image A1 shown in Fig. 4 is extracted.

The command input device 5b selects memory storage image M1 stored in the data storage memory 26 shown in Fig. 5 (SP6 and SP7) and determines an editorial process to which the image data is to be subjected (i.e., overwriting of the image data onto the image composited area D2) (SP8). If there is another image desired to be extracted (YES is selected in SP9), the process proceeds to SP7, and a similar process is iterated. If no other area is desired to be extracted (NO is selected in SP9), a memory storage image M1 is read.

The first original 40 is read by the scanner section 10 (SP10), whereby multivalued data S6 is sent to the image processing device 11 from the scanner 10. The image processing device 11 converts the multivalued data S6 into editorial binary data S4 (SP11). The editorial binary data S4 is sent to the editing device 6.

The editing device 6 stores the editorial binary data S4 (SP12).

Immediately before reading a second original 41 by the scanner 10, the editing device 6 generates the region data S12 pertaining to the image composited area D1 from the coordinate data S1 pertaining to the image composited area D1. From the coordinate data S1 pertaining to the extracted image A1, the region data S12 pertaining to the extracted image A1 is generated. These two region data S12 are compared in size with each other, thereby determining a scaling factor (i.e., zooming ratio and reduction ratio) required for reading the second original 41 (SP13). The scaling factor is output to the image processing device 11 as the modification data S3.

The image processing device 11 enlarges or reduces the lateral size of image data, by changing the speed at which the scanner section 10 is to travel in a sub-scanning direction at the time of reading an original.

The longitudinal size of image data is enlarged or reduced by interpolating or thinly sampling the multivalued data S6 input to the image processing device 11 during the course of the multivalued data S6 being converted into binary data S7.

As the second original is read by the scanner section 10 (SP14), the multivalued data S6 is input to the image processing device 11. Simultaneously, the editing device 6 inputs the modification data S3 to the image processing device 11.

At this time, the image processing device 11 performs binary-coding operation corresponding to the modification data S3 with reference thereto (SP15), and the editorial binary data S4 is output to the editing device 6.

The editing device 6 performs an image compositing operation, thereby overwriting the extracted image A1 on the image composited area D1 (SP16). These processing operations are iterated until all extracted images of the second original are composited into the first original (SP17).

After having overwriting the extracted image A1 on the image composited area D1, the editing device 6 superimposes the memory storage image M1 on the image composited area D2.

The editing device 6 determines the region data S12 pertaining to the image composited area D2 from the stored coordinate data S1 pertaining to the image composited area D2, and compares the size of the area data S12 with the size of the memory storage image M1, thus determining the scaling factor of the memory storage image M1 (SP18). The memory storage image M1 is composited into (overwritten on) the image composited area D2 (SP19). Thus, a composite image is completed.

If there is no other memory storage image to be composited (NO is selected in SP20), a final composite image is completed.

The thus-composited image is returned to the image processing device 11 as the binary data S5 for a printing purpose. In the image processing device 11, the binary data S5 is converted into the output binary data S7, and the output binary data S7 is delivered to the print device 12.

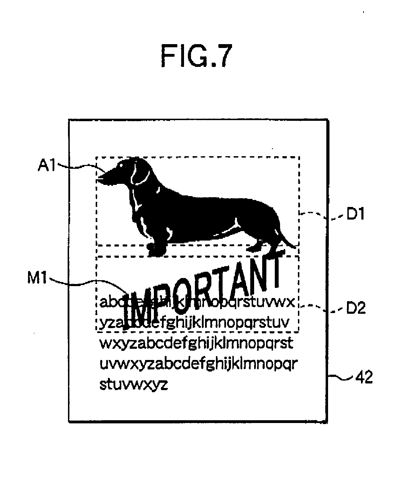

Fig. 7 is an illustration showing a print image 42 produced through the compositing operations set forth. According to the foregoing operations, the extracted image A1 shown in Fig. 4 is overwritten on the image composited area D1 shown in Fig. 3, and the memory storage image M1 shown in Fig. 5 is superimposed on the image composited area D2 shown in Fig. 3.

The thus-edited image is printed, wherewith printed matter can be obtained. According to the construction which enables all image compositing operations at the time of an editorial process, desired printed matter without displaced images can be produced by a single printing operation.

Particularly, since the stencil printing machine is constructed to perform a stencil-forming operation on the thus-composited image data and a printing operation through use of the thus-produced stencil, only one stencil-forming operation is required. In contrast with overprinting involving use of two or more stencils, the present invention can prevent wastage of stencils.

The editorial process has been described with reference to the example involving overwriting of the extracted image A1 and superimposing of the memory storage image M1. As a matter of course, an editorial operation can be arbitrarily selected in accordance with an editorial instruction input by the command input device 5b.

A process to be performed by the editing device 6 during the editorial process will be described.

First, the coordinate data S1 pertaining to the image composited area D1 and the image composited area D2 on the first original 40 are delivered to the CPU 23 from the coordinate input device 5a and retained in the CPU 23.

Next, the coordinate data S1 pertaining to the extracted image A1 on the second original 41, and the command data S2 from the command input device 5b pertaining to the image processing operation to which the extracted image A1 is to be subjected are delivered to and retained in the CPU 23.

Further, the command data S2 pertaining to the image processing operation to which the image composited area D2 is to be subjected is delivered to the CPU 23 from the command input device 5b and retained in the CPU 23.

Simultaneous with reading of the first original 40, the editorial binary data S4 is delivered from the image processing device 11 to the image extraction section 24. The image extraction section 24 delivers all data to the de-archiving memory 29 as the extracted data S14, and the extracted data S14 is preserved in the de-archiving memory 29.

After storage of the data into the de-archiving memory 29 has been completed, the de-archiving memory 29 sends the retained extracted data S14 to the composite memory 30 as the composite data S15. The composite data S15 is stored in the composite memory 30.

Immediately before reading of the second original 41, the CPU 23 generates the area data S12 pertaining to the image composited area D1 from the coordinate data S1 pertaining to the image composited area D1, and determines the area data S12 pertaining to the extracted image A1 from the coordinate data S1 pertaining to the extracted image A1. The sizes of the two area data S12 are compared with each other, thereby determining a scaling factor to be used for reading the second original 41.

On the basis of the retained command data S2, there are determined the method of compositing the extracted image A1 relative to the image composited area D1, and the details regarding an editing of the extracted image A1.

The thus-determined information is delivered to and stored in the modification information memory 28 as the de-archiving modification data S10. Subsequently, simultaneous with reading of the second original 41, the modification data S3 is delivered to the image processing device 11 from the modification information memory 28, and the area data S12 is delivered to the image extraction section 24.

On the basis of the area data S12, the image extraction section 24 extracts image data pertaining to the extracted image A1 from the editorial binary data S4 delivered from the image processing device 11, so that extracted data S14 is formed. The thus-extracted data S14 is delivered to and stored in the de-archiving memory 29.

After storage of the data into the de-archiving memory 29 has been completed, the dearching memory 29 sends the retained data to the composite memory 30 as the composite data S15. The composite data S15 is stored in a data portion of the image composited area Dl within the composite memory 30.

After the composite for the image composited area D1 has been completed, the CPU 23 determines the area data S12 pertaining to the image composited area D2 from the retained coordinate data S1 pertaining to the image composited area D2. The size of the area data S12 is compared with the size of the memory storage image M1, thus determining a scaling factor of the memory storage image M1. On the basis of the retained command data S2, the method of compositing the memory storage image M1 relative to the image composited area D2, and details regarding an editing of the memory storage image M1 are determined.

On the basis of the information determined by the CPU 23, the data storage memory 26 sends only a black image of the retained memory storage image M1 to the composite memory 30 as the memory image data S19. The memory image data S19 is stored in a data portion of the image composited area 2 within the composite memory 30.

After storage of the data into the composite memory 30 has been completed, the composite memory 30 sends the retained data to the image output section 25 as the composited data S16. The image output section 25 delivers the composited data S16 to the image processing device 11 as the binary data S5 for a printing purpose.

Next, a saving process for saving an image into the data storage memory 26 will be described. More specifically, the saving process will be described with reference to a case where the extracted image A2 on the second original 41 is stored.

The coordinates of the extracted image A2 on the second original 41 are indicated by the coordinate input device 5a, and the image storage process is selected by the command input device 5b, thus determining details regarding an image processing of the extracted image A2.

The coordinate data S1 and the command data S2 are delivered to the editing device 6, and are retained in the CPU 23.

Subsequently, from the data retained in the CPU 23, the CPU 23 determines the area data S12 pertaining to the image extraction section 24 and details of an image processing. The thus-determined data is delivered to and retained in the modification information memory 28 as the de-archiving modification data S10.

Afterwards, simultaneous with reading of the second original 41, the modification data S3 is delivered to the image processing device 11 from the modification information memory 28, and the area data S12 is sent to the image extraction section 24.

Simultaneously, the multivalued data S6 pertaining to the second original 41 is sent to the image processing device 11 by the scanner section 10. The image processing device 11 performs a binary-coding operation, and sends the resultant editorial binary data 54 to the editing device 6.

On the basis of the area data S12, the image extraction section 24 extracts image data pertaining to the extracted image A2 from the binary data S4 delivered from the image processing device 11. The thus-extracted image data is sent to and stored in the de-archiving memory 29 as the extracted data S14.

After storage of the data into the de-archiving memory 29 has been completed, the data retained in the de-archiving memory 29 is sent to the data storage memory 26 as the storage data S18. The storage data 18 is stored in the data storage memory 26.

Although the previous embodiment has been described with reference to an example involving use of one original for image extraction and designation of only one extracted image, a plurality of originals may be used for the extraction. Further, selection of a plurality of extracted images from a single original is also possible. For example, as shown in Fig. 4, extraction of the extracted image A2 in addition to the extracted image A1 is possible.

Further, although the present invention has been described by use of only one memory storage image, a plurality of images stored in the data storage memory 26 may be used selectively in a case where a plurality of memory storage images are stored in the data storage memory 26.

A memory serving as the storage device 21 can be constructed so as to be extendable by mounting a SIMM (i.e., Single In-line Memory Module) or like memory in the form of a socket. The memory can be freely increased or decreased in accordance with specifications of the image forming apparatus 2, such as resolution.

The storage device 21 may be constructed such that necessary data is stored into a storage medium, such as a floppy disk etc., which is detachable from an external drive unit. Of course, the storage device 21 may be equipped with such the drive unit suitable for the storage medium. In such a case, storage images can be stored in the storage medium, thereby enabling use of image data in another apparatus.

The editing device 6 of the foregoing image forming apparatus can be constructed so as to be roughly divided into an image processing board serving as the editorial processing device 20 and a memory board serving as the storage device 21. Memory devices provided on the memory board serving as the storage device 21 are controlled by a bus controller provided in the image forming apparatus. When the image forming apparatus does not use any memory devices, the memory board may be supplied as a memory board to another apparatus.

Although the aforementioned embodiment has been described by taking the stencil printing machine as an image forming apparatus, the image editing process is not limited to the stencil printing machine. The same working-effect can be achieved even when the present invention is applied to an apparatus, such as a copier or another printing machine, which performs a predetermined editorial operation, such as a compositing operation, on the basis of a plurality of originals.

## Claims

1. An image forming method for forming an image on a printable object on the basis of image data obtained by editing images of a plurality of originals, the method comprising the steps of:
determining an image composited area of a first original by indicating coordinates of the image composited area;
extracting an image extracted area of a second original to produce image data pertaining to the image extracted area by indicating coordinates of the image extracted area;
editing the image data so as to composite the image extracted area of the second original into the image composited area of the first original in order to obtain post-editing image data for representing a composite image based on the first and second originals; and
forming the composite image on a printable object in accordance with the post-editing image data.

2. The image forming method of claim 1, further comprising a step of designating an editorial process in which the image extracted area of the second original is edited relative to the image composited area of the first original, wherein the editing step is performed in accordance with the editorial process.

3. The image forming method of claim 1, wherein, in a case where a portion or a whole of an image of the second original is extracted, and is composited into the first original, a size of an image composited area of the first original is compared in the editing step with a size of an image extracted area of the second original, thereby effecting a scaling process so as to fit an image located in the image extracted area to the image composited area.

4. The image forming method of claim 3, wherein the image extracted area of the second original is read in accordance with a scaling factor obtained as a result of the scaling process.

5. The image forming method according to any one of claims 1, 3 and 4, further comprising a step of storing a portion or a whole of image data pertaining to the respective first and second originals, wherein a storage image obtained in the storing step is read in the editing step in order to composite a read image into the image composited area of the first original.

6. The image forming method of claim 1, further comprising a step of storing a portion or a whole of image data pertaining to the respective first and second originals,
wherein, in a case where a storage image of the second original obtained in the storing step is composited into the first original, a size of an image composited area of the first original is compared in the editing step with a size of an image extracted area from which the storage image has been extracted, thereby effecting a scaling process so as to fit an extracted storage image to the image composited area.

7. An image forming system, comprising:
a coordinate input means which is capable of indicating an image composited area of a first original and an image extracted area of a second original;
a command input means which is capable of designating an editorial process in which the image extracted area of the second original is edited relative to the image composited area of the first original;
a scanner section which reads image data on the first and second originals;
an editing means which edits image data pertaining to the image extracted area of the second original so as to composite the image extracted area of the second original into the image composited area of the first original, in accordance with the editorial process designated by the command input means, in order to obtain post-editing image data for representing a composite image based on the first and second originals; and
a print means which forms the composite image on a printable object in accordance with the post-editing image data.

8. The image forming system of claim 7, wherein, in a case where a portion or a whole of the second original is extracted, and is composited into the first original, the editing means compares a size of an image composited area of the first original indicated by the coordinate input means with a size of an image extracted area of the second original, thereby effecting a scaling process so as to fit an image located in the image extracted area to the image composited area.

9. The image forming system of claim 8, wherein the editing means performs a process for causing the scanner section to read the second original in accordance with a scaling factor obtained as a result of the scaling process.

10. The image forming system according to any one of claims 7, 8 and 9, further comprising a storage means which stores a portion or a whole of image data pertaining to the respective first and second originals read by the scanner section,
wherein the editing means reads a storage image from the storage means, and composites a read image into the image composited area of the first original.

11. The image forming system of claim 7, further comprising a storage means which stores a portion or a whole of image data pertaining to the respective first and second originals read by the scanner section,
wherein, in a case where a storage image read from the storage means is composited into the first original, the editing means compares a size of an image composited area of the first original indicated by the coordinate input means with a size of an image extracted area from which the storage image has been extracted, thereby effecting a scaling process so as to fit an extracted storage image to the size of the image composited area of the first original.
